# EUROPEAN PATENT APPLICATION

(11) **EP 4 800 572 A1**
(43) Date of publication of application: **02.09.2026**
(21) Application number: 26160823.6
(22) Date of filing: 26.02.2026
(51) Int. Cl.: G06F 16/901, G06F 16/9032, G06F 16/9035

(54) **ITEM RETRIEVAL USING CHAIN-OF-THOUGHT QUERY CATEGORIZATION**

(30) Priority: 27.02.2025 US 202563764493 P; 11.08.2025 US 202519296116
(71) Applicant: eBay Inc., San Jose, CA 95125 (US)
(72) Inventor: DURAJ, Jetlir, San Jose, 95125 (US); KHAN, Ishita Kamal, San Jose, 95125 (US); MERKELBACH, Kilian, San Jose, 95125 (US); ELYASI, Mehran, San Jose, 95125 (US)
(74) Representative: Müller-Boré & Partner Patentanwälte PartG mbB

(57) **Abstract**

Some aspects relate to technologies for a search engine that performs item retrieval on a listing platform using chain-of-thought (CoT) query categorization. The system receives a search query (e.g., a natural language query) and performs a tree search on a hierarchical taxonomy of categories using a language model that semantically scores category nodes. Less relevant branches are pruned, and traversal continues along high-scoring paths using different traversal approaches, such as a breadth-first or depth-first approach. This process identifies candidate leaf categories aligned with the search query. The language model then scores these candidate categories. Based on the relevance scores, one or more relevant leaf categories are selected. The system then queries an item listings data store constrained by the selected categories and returns the resulting search results.

## Description

### CROSS-REFERENCE TO RELATED APPLICATIONS

This application claims the benefit of U.S. Provisional Application No. 63/764,493, filed February 27, 2025, which is herein incorporated by reference in its entirety.

### BACKGROUND

Listing platforms, such as e-commerce websites, are online platforms that offer products, services, digital content (e.g., music, videos, etc.), or other items to users. Such platforms typically offer a vast number of items. While some items are relevant to any given user, the majority is not. As a result, item retrieval for listing platforms is a particular Internet-centric problem that has proven to be difficult to fully address. That is, given a large number of items available on a listing platform, what items should be retrieved and presented to a user and in what order.

Given the vast number of items available, listing platforms include functionality, such as search and recommendation, to assist users in finding items of interest on the platforms. For instance, listing platforms often provide search capabilities that receive user queries and return search results identifying items relevant to the user queries. Listing platforms also often leverage recommendation systems to recommend items that are likely of interest to users based on a variety of information, such as an item currently being viewed by a user, user attributes, and user behavior on the listing platforms (e.g., previous item views, purchases, etc.).

### SUMMARY

Some aspects of the present technology relate to, among other things, a search engine of a listing platform that performs item retrieval using chain-of-thought (CoT) query categorization. In some aspects, the system receives a search query, which may be expressed in natural language and include keywords or phrases indicative of user intent. The system performs a tree search on a hierarchical taxonomy of categories using a language model that applies semantic scoring to evaluate the relevance of each category node. This involves traversing the category taxonomy and pruning less relevant branches while retaining paths that lead to high-scoring leaf nodes. A variety of traversal techniques can be employed, such as a breadth-first approach or a depth-first approach. From this traversal, the system identifies a set of candidate leaf categories that are semantically aligned with the search query. The language model then generates a relevance score for each of these candidate leaf categories, potentially incorporating contextual signals such as user preferences or historical behavior. Using these relevance scores, the system selects one or more of the most relevant leaf categories. Finally, the system generates search results by querying an item listings data store constrained by the selected leaf categories and provides these search results in response to the search query.

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

### BRIEF DESCRIPTION OF THE DRAWINGS

The present technology is described in detail below with reference to the attached drawing figures, wherein:

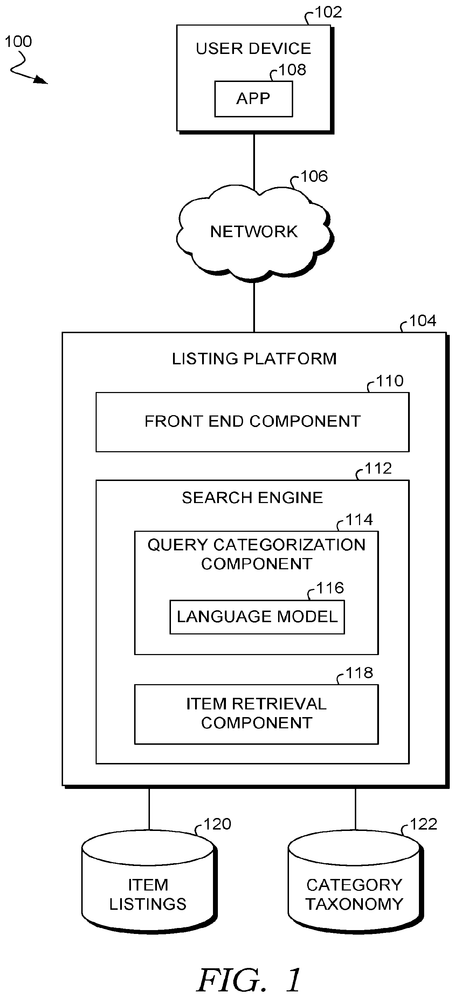

FIG. 1 is a block diagram illustrating an exemplary system in accordance with some implementations of the present disclosure;
FIG. 1 is a block diagram illustrating an exemplary system in accordance with some implementations of the present disclosure;.
FIG. 2 is a diagram illustrating an example of a breadth-first query categorization approach applied to a category taxonomy in accordance with some implementations of the present disclosure;
FIG. 3 a diagram illustrating an example of depth-first query categorization approach applied to a category taxonomy in accordance with some implementations of the present disclosure;
FIG. 4 is a flow diagram showing a method for performing item retrieval using chain-of-thought query categorization in accordance with some implementations of the present disclosure;
FIG. 5 is a flow diagram showing a method for performing chain-of-thought query categorization using a breadth-first approach in accordance with some implementations of the present disclosure;
FIG. 6 is a flow diagram showing a method for performing chain-of-thought query categorization using a depth-first approach in accordance with some implementations of the present disclosure; and
FIG. 7 is a block diagram of an exemplary computing environment suitable for use in implementations of the present disclosure.

### DETAILED DESCRIPTION

### Overview

Search engines are a foundational component of modern computer technology, serving as essential tools for navigating the vast and ever-expanding web. Their importance is particularly pronounced in the context of online listing platforms, which rely on search functionality to locate specific item listings among millions or billions of item listings. Given the enormous inventory of item listings, it is impractical for users to manually browse or locate relevant listings without the aid of a search engine. The ability to efficiently surface relevant item listings from such massive datasets is critical to these online platforms, especially for online platforms that experience high volumes of user traffic.

Two particular technical considerations in the design and operation of search engines are latency and relevance. Latency refers to the time it takes for a search engine to return search results after a search query is received, and it must remain below an acceptable threshold to ensure a responsive user experience. Relevance, on the other hand, pertains to the accuracy with which the search engine interprets the user's intent from a search query and returns search results that match that intent. When search results are not relevant, users are often forced to submit additional, refined search queries in an attempt to find what they are looking for. This behavior not only degrades the user experience but also imposes additional computational burdens on the server infrastructure that provides the search engine. Each additional search query consumes processing resources and contributes to increased latency, particularly in large-scale server farms that must handle millions of search queries per day.

To improve relevance and ensure acceptable latency, conventional search engines employ a variety of different techniques, such as query categorization techniques that attempt to infer the user's intent by mapping the search query to one or more predefined categories within a taxonomy. These categories are then used to constrain the search space and improve the precision of the search results. However, traditional query categorization approaches used by search engines suffer from several significant limitations. For instance, many rely on approaches that use historical user behavior data, such as click-through rates, to infer category relevance. These conventional approaches are inherently biased by presentation effects as users tend to click on items that are prominently displayed, regardless of their true relevance. These conventional approaches also struggle with data sparsity (i.e., sufficient historical user behavior data is unavailable), particularly for long-tail queries and newly added item listings. Other conventional query categorization approaches use static semantic embeddings to match search queries to categories, but these approaches often lack the flexibility to adapt to the nuanced and evolving nature of user intent. They also fail to leverage the hierarchical structure of category taxonomies in a meaningful way, resulting in suboptimal mappings that can degrade search performance and result in increased latency.

Aspects of the technology described herein improve the functioning of search engines for listing platforms in light of these shortcomings in existing search technologies by providing a solution involving a chain-of-thought (CoT) reasoning framework using language models to traverse a category taxonomy for search queries. The system processes search queries via a CoT process that traverses the category taxonomy to semantically map the search queries to relevant categories, enabling more accurate and efficient retrieval of item listings. For a given search query, the process can involve traversing the category taxonomy to identify candidate leaf categories that best match the search query, using a language model to perform semantic scoring of categories and the search query. The traversal can be performed using various strategies, including breadth-first and depth-first approaches, depending on the desired balance between comprehensiveness and precision. After collecting a set of candidate leaf categories from traversing the category taxonomy, the system can use the language model to generate a relevance score for each of those leaf categories, and use the relevance scores to select one or more of those categories to return search results for the search query.

In a breadth-first approach, the system evaluates all categories at each level of the taxonomy before proceeding to the next level. Starting from the root, the system uses a language model to score each category based on semantic relevance to the search query and prunes categories below a dynamic threshold and/or minimum threshold. The traversal continues level by level, only exploring subtrees of categories that meet the relevance criteria. Leaf categories encountered during this process are added to a set of candidates categories. This approach ensures a broad and efficient exploration of the category taxonomy, dynamically adapting to the semantic distribution of categories at each level to identify the most relevant leaf categories for the search query.

In a depth-first approach, the system explores one subtree path through the category taxonomy at a time, scoring each category node along the path until it either reaches a leaf category or encounters a node that fails to meet a relevance threshold. If a leaf category is reached during a subtree traversal, the leaf category is added to a set of candidate categories. This process is repeated for subtrees in the category taxonomy. The depth-first strategy is particularly effective for high-precision applications and for diagnosing weaknesses in the taxonomy structure, as it highlights paths that consistently fail to yield relevant categories.

Aspects of the technology described herein provide a number of improvements over existing item retrieval technologies, such as improvements to relevance and latency of search engines. By employing a chain-of-thought (CoT) query categorization framework powered by a language model, the system enables more accurate semantic mapping of search queries to categories within a hierarchical taxonomy. This improved categorization enhances the precision of item retrieval, allowing the search engine to focus its operations on a narrower, more relevant subset of the item listings database. As a result, the computational workload associated with broad, imprecise searches is significantly reduced, leading to lower latency in generating search results.

The use of traversal strategies such as breadth-first and depth-first approaches further optimizes the categorization process. The breadth-first approach allows for early pruning of irrelevant branches in the taxonomy, minimizing unnecessary evaluations and conserving processing resources. The depth-first approach can enable focused exploration of individual paths, which is effective in identifying and eliminating semantically weak or misaligned nodes. The strategies contribute to a more efficient use of computational resources by reducing the number of categories that must be evaluated and scored by the language model.

One technical benefit of the improved relevance achieved through this system is the reduction in the number of follow-up or refined search queries. When the initial search query yields highly relevant results, users are less likely to submit additional queries to refine their search. This reduction in query volume directly translates to decreased computational demand on the server infrastructure that supports the search engine. Fewer search queries mean fewer processing cycles, lower memory usage, and reduced network traffic, all of which contribute to improved scalability and cost-efficiency of the search engine platform, as well as reduced latency that results from processing larger numbers of search queries.

Moreover, the system's ability to incorporate contextual signals and dynamically adjust relevance thresholds ensures that the categorization process remains robust across a wide range of query types and data conditions. This adaptability enhances the consistency and reliability of the search engine's performance, further supporting its technical efficiency and effectiveness, especially in large-scale environments.

### Example System for Item Retrieval using Chain-of-Thought Query Categorization

With reference now to the drawings, FIG. 1 is a block diagram illustrating an exemplary system 100 for performing item retrieval on a listing platform by using chain-of-thought (CoT) query categorization in accordance with implementations of the present disclosure. It should be understood that this and other arrangements described herein are set forth only as examples. Other arrangements and elements (e.g., machines, interfaces, functions, orders, and groupings of functions, etc.) can be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, various functions may be carried out by a processor executing instructions stored in memory.

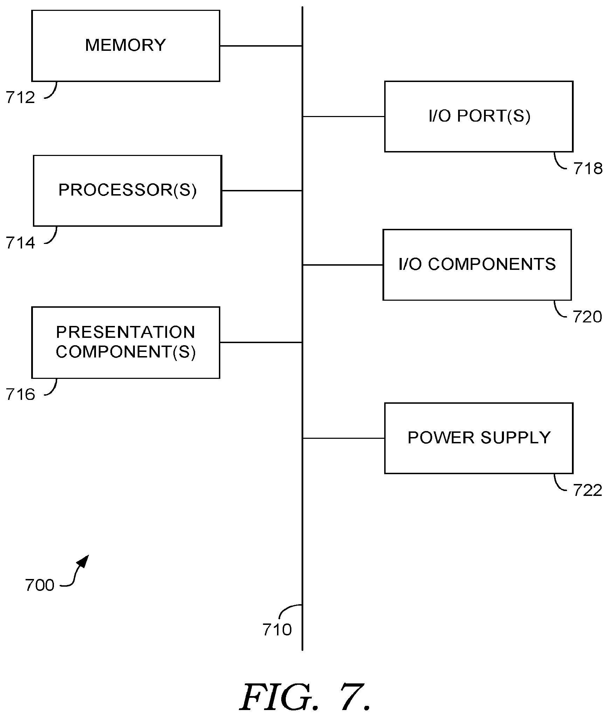

The system 100 is an example of a suitable architecture for implementing certain aspects of the present disclosure. Among other components not shown, the system 100 includes a user device 102 and a listing platform 104. Each of the user device 102 and the listing platform 104 shown in FIG. 1 can comprise one or more computer devices, such as the computing device 700 of FIG. 7, discussed below. As shown in FIG. 1, the user device 102 and the listing platform 104 can communicate via a network 106, which may include, without limitation, one or more local area networks (LANs) and/or wide area networks (WANs). Such networking environments are commonplace in offices, enterprise-wide computer networks, intranets, and the Internet. It should be understood that any number of user devices and servers may be employed within the system 100 within the scope of the present technology. Each may comprise a single device or multiple devices cooperating in a distributed environment. For instance, the listing platform 104 and the listing platform 104 could each be provided by multiple server devices collectively providing the functionality of the listing platform 104 and the listing platform 104 as described herein. Additionally, other components not shown may also be included within the network environment.

The user device 102 can be a client device on the client-side of system 100, while the listing platform 104 can be on the server-side of system 100. The listing platform 104 can comprise server-side software designed to work in conjunction with client-side software on the user device 102 so as to implement any combination of the features and functionalities discussed in the present disclosure. For instance, the user device 102 can include an application 108 for interacting with the listing platform 104. The application 108 can be, for instance, a web browser or a dedicated application for providing functions, such as those described herein. This division of system 100 is provided to illustrate one example of a suitable environment, and there is no requirement for each implementation that any combination of the listing platform 104 and the listing platform 104 remain as separate entities. For instance, in some aspects, the listing platform 104 is a part of the listing platform 104. While the system 100 illustrates a configuration in a networked environment with a separate user device and listing platform, it should be understood that other configurations can be employed in which aspects of the various components are combined.

The user device 102 may comprise any type of computing device capable of use by a user. For example, in one aspect, a user device may be the type of computing device 700 described in relation to FIG. 7 herein. By way of example and not limitation, the user device 102 may be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device. A user may be associated with the user device 102 and may interact with the listing platform 104 and/or the listing platform 104 via the user device 102.

The listing platform 104 generally provides, to user devices such as the user device 102, item listings describing items (physical or digital) available for purchase, rent, streaming, download, etc. For instance, the listing platform 104 could comprise an e-commerce platform, in which listed products or services are available for purchase by users of the user device 102 upon navigation to the listing platform 104. As other examples, the listing platform 104 could comprise a rental platform listing various items for rent (e.g., equipment, tools, real estate, vehicles, contract employees) or a media platform listing digital content items (e.g., digital content for streaming/download).

As shown in FIG. 1, the listing platform 104 includes a front end component 110 and a search engine 112. The components of the listing platform 104 may be in addition to other components that provide further additional functions beyond the features described herein. The listing platform 104 can be implemented using one or more server devices, one or more platforms with corresponding application programming interfaces, cloud infrastructure, and the like. While the listing platform 104 is shown separate from the user device 102 in the configuration of FIG. 1, it should be understood that in other configurations, some of the functions of the listing platform 104 can be provided on the user device 102. Additionally, while these components are shown as part of the listing platform 104, in other configurations, one or more of the components can be provided by another component not shown in FIG. 1. The components can be provided by a single entity or multiple entities.

In some aspects, the functions performed by components of the listing platform 104 are associated with one or more applications, services, or routines. In particular, such applications, services, or routines may operate on one or more user devices, servers, may be distributed across one or more user devices and servers, or be implemented in the cloud. Moreover, in some aspects, these components of the listing platform 104 may be distributed across a network, including one or more servers and client devices, in the cloud, and/or may reside on a user device. Moreover, these components, functions performed by these components, or services carried out by these components may be implemented at appropriate abstraction layer(s) such as the operating system layer, application layer, hardware layer, etc., of the computing system(s). Alternatively, or in addition, the functionality of these components and/or the aspects of the technology described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. Additionally, although functionality is described herein with regards to specific components shown in example system 100, it is contemplated that in some aspects, functionality of these components can be shared or distributed across other components.

The front end component 110 of the listing platform 104 provides user interfaces to user devices, such as the user device 102, that enable surfacing of item listings for items available on the listing platform 104. Item data for item listings of items available for sale/rent/consumption via the listing platform 104 are stored by an item listings data store 120. The item data for each item listing can include, for instance, a description relating to an item comprising one or more of a price in a currency, reviews, images of the item, shipment options, a rating, a condition of the item, a size of the item, a color of the item, etc.

The item listings data store 120 can use one or more structured data systems to support different functions, such as presenting item pages and performing search. For generating and presenting item pages, item data can be stored, for instance, in relational databases or document-oriented stores, where a record for each item listing contains fields such as title, price, description, and seller information. For search operations, item data can be stored using formats, such as inverted indices, that facilitate querying the item data to identify relevant item listings. These storage formats can enable, for instance, efficient keyword retrieval, filtering, and faceting. In some cases, vector databases can be used to support similarity-based or semantic search through item embeddings. These storage systems can be kept in sync through data pipelines or real-time update mechanisms to ensure consistency across search and presentation layers.

In accordance with aspects of the present technology, each item listing is associated with one or more item categories from a predefined hierarchical taxonomy of categories, which can be stored in a category taxonomy 122. The categories provide for grouping item listings based on shared characteristics or intended use. Among other things, the categories can be used to organize item listings, aid user navigation of item listings on the listing platform 104, and to facilitate search functions. The hierarchical taxonomy includes intermediate categories, which are each divisible into subcategories (or branch categories), and leaf categories, which are not divisible.

While only a single front end component 110 is shown in FIG. 1, it should be understood that the listing platform 104 can have any number of front end components that can provide a variety of different functions. Among other things, the front end component 110 can provide item pages for item listings for presentation on user devices. The front end component 110 can also facilitate searches through a search interface that receives search queries and returns search results. This can include, for instance, providing search result pages that display search results, as well as filtering, sorting, and/or other refinement options. The front end component 110 also communicates with backend services of the listing platform to provide various functionalities, including search functionality provided by a search engine 112 of the listing platform.

The search engine 112 is a specialized information retrieval system designed to process search queries from user devices received at the front end component 110 and return search results identifying item listings from the item listings data store 120. The item listings data store 120 can include, for instance, a structured database of item data for item listings, where each item listing is represented by a set of attributes such as title, description, price, category, brand, availability, and user-generated content like reviews and ratings. In some aspects, item listings are indexed in the item listings data store 120 by transforming structured and unstructured data into a searchable format. This can include, for instance, tokenizing text fields, normalizing values (e.g., converting units or standardizing brand names), and creating inverted indices and/or other data formats for fast lookup. Metadata such as popularity scores, inventory levels, and ratings may also be indexed to support ranking and filtering.

When a search query is received, the search engine 112 can parse the search query and perform a number of pre-processing functions, such as keyword extraction, synonym expansion, tokenization, normalization, and query categorization. The search engine 112 then identifies and ranks item listings based on, among other things, relevance to the processed query. In some cases, this can include a multi-stage retrieval and ranking process. For instance, the search engine 112 can perform candidate retrieval, where it uses the processed query to search the item listings data store 120 and retrieve a broader set of potentially relevant item listings. This can be done using inverted indices that map terms to the item listings in which they appear. The search engine 112 can also apply filtering and/or ranking to narrow down and prioritize the candidate item listings. Filtering may involve applying hard constraints based on query intent or user-selected facets. Ranking can include computing a relevance score for each candidate item listings based on a combination of signals, such as textual similarity, attribute matching (e.g., brand, features), and behavioral signals (e.g., click-through rates, conversion rates). The search engine 112 can order the item listings based on their relevance scores to provide an ordered set of item listings as search results.

Among other components not shown in FIG. 1, the search engine 112 includes a query categorization component 114 and an item retrieval component 118. The query categorization component 114 performs query categorization for search queries by operating as an intelligent intermediary between each search query and the category taxonomy 122 of the listing platform 104. Upon receiving a search query, via the front end component 110, the query categorization component 114 performs a semantic categorization process that leverages a language model 116 to interpret and categorize the search query. The query categorization component 114 performs a tree search over the category taxonomy 122, using the language model 116 to semantically score the relevance of each category node to the search query.

In accordance with aspects of the technology described herein, the query categorization component 114 employs a chain-of-thought (CoT) reasoning process that iteratively narrows down the taxonomy to a set of candidate leaf categories. The CoT process involves traversing the category taxonomy 122 using the language model 116 to generate relevance scores of categories, and pruning categories based the relevance scores. The language model 116 can generate relevance scores of categories using a variety of different category data for each category. The category data used for each category can include, for instance, a category name, a hierarchical path to the category (i.e., breadcrumbs), a textual description of the category, as well as other category information useful to assess the semantic relevance of each category to the input query. In some aspects, the system is also capable of incorporating additional contextual signals, such as user intent, user preferences, or historical behavior, into the prompts provided to the language model 116. This enables a form of context learning that enhances the precision and personalization of the categorization process.

The result of the CoT process performed by the query categorization component 114 is a set of candidate leaf categories. These candidate leaf categories are then scored by the language model 116, and one or more of the highest-scoring leaf categories are selected as the final categorization result and passed to the item retrieval component 118, which uses the one or more selected leaf categories to retrieve relevant item listings. The query categorization component 114 can employ different traversal strategies through the category taxonomy 122, including breadth-first and depth-first approaches, each offering distinct advantages depending on the application context.

In a breadth-first approach, the query categorization component 114 processes the category taxonomy 122 level by level, beginning at the root level. In some aspects, the categorization task can be viewed as one of regression (score assignment) after classification, by solving the classification problem in terms of relevant leaf categories fully, before addressing the regression problem. Specifically, for a given query, at level 1 below a root node in the category taxonomy 122, after scoring the semantic relevance of all level-1 categories, the query categorization component 114 continues processing children categories of only the most semantically relevant children, pruning the rest. In other words, at the first level after a root node, all categories at the level are considered, and the language model 116 generates semantic relevance scores based on the search query and category data for the categories at that level.

The query categorization component 114 compares the relevance scores for each category against one or more thresholds to select a subset of categories to retain. These thresholds help prune irrelevant categories while preserving those with high semantic alignment to the query. In some aspects, the query categorization component 114 uses dynamic threshold and/or an minimum threshold. For example, the threshold(s) can be set within a range from 1 to 10, and the language model 116 can be configured to generate a semantic relevance score of each category at the current level within that range mapped. When used, the dynamic threshold is derived from the relevance scores of the categories at the current level. In some configurations, the relevance scores for the categories can be mapped to the standard normal distribution, and the dynamic threshold can divided by 10 is applied to the standardized scores to prune less relevant categories. For example, with a dynamic threshold of 9 (out of 10), categories scoring below the mean plus 0.9 times the standard deviation of relevance scores are pruned. To prevent high skewness at the lower end, a minimum threshold be used in which a category's original relevance score must exceed the minimum threshold to survive further.

After processing the first level of categories under the root node, the query categorization component 114 examines each subtree starting from the children categories of the first level categories that survived the initial pruning. The query categorization component 114 repeats the pruning process for intermediate categories in these subtrees to identify non-pruned categories using a dynamic threshold and/or minimum threshold, as described above. This iterative process continues by traversing each level of the category taxonomy 122 until leaf categories are reached, which are added to a set of candidate leaf categories. The query categorization component 114 then generates relevance scores for the candidate leaf categories, and selects one or more of those leaf categories based on the relevance scores. In some aspects, when the search relies on relative rather than absolute semantic thresholding, the query categorization component 114 scores the set of candidate leaf categories based on their semantic relevance to the query using only leaf category information (breadcrumb + descriptions).

This breadth-first strategy ensures a comprehensive exploration of the taxonomy while maintaining computational efficiency by pruning irrelevant branches early in the process. The use of relative scoring thresholds allows the system to adapt dynamically to the semantic distribution of categories at each level, improving robustness across diverse query types.

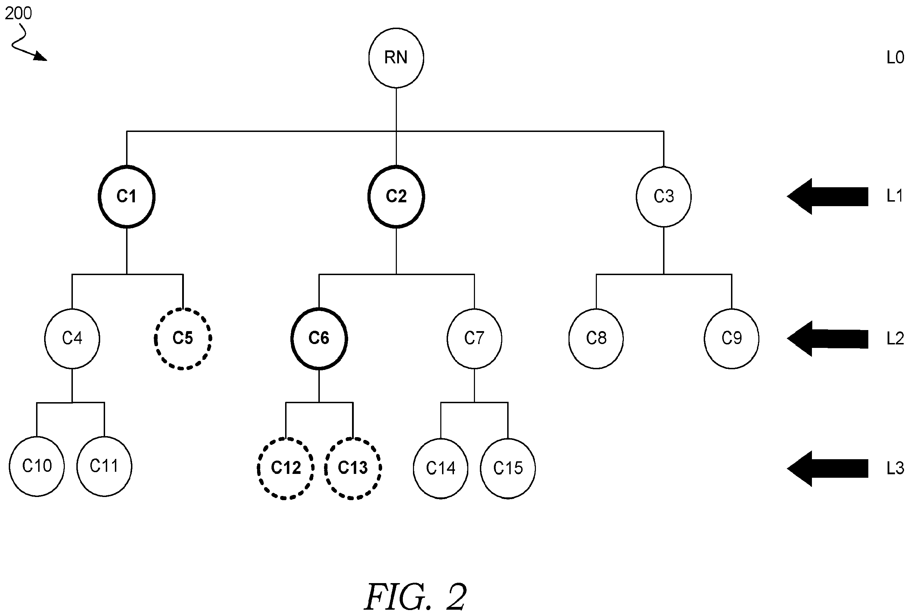

FIG. 2 illustrates an example of the breadth-first approach applied to a category taxonomy 200. The category taxonomy 200 is structured in a hierarchy across four levels, beginning with a root node (RN) at level 0 (L0). Directly beneath the root node at level 1 (L1) are three categories labeled C1, C2, and C3. These categories represent the first set of nodes evaluated in the breadth-first traversal. The language model scores each of these categories based on their semantic relevance to a given search query. In this example, categories C1 and C2 are selected for further exploration due to their high relevance scores, while C3 and its children are pruned from further consider based on category C3 having a lower relevance score.

At level 2 (L2), the traversal continues by evaluating the child categories of the selected L1 nodes. Category C5, which is a leaf category under category C1, is added to the set of candidate leaf categories since it has no children. The remaining children of categories C1 and C2, category C4 under C1 and categories C6 and C7 under C2, are scored by the language model. In this example, among these, only category C6 is selected based on its relevance score, while categories C4 and C7 and their children are excluded based on the categories C4 and C7 having lower relevance scores.

The traversal then proceeds to level 3 (L3), where the children of the selected category C6 are evaluated. Because the only remaining categories C12 and C13 are leaf categories, they are added to the set of candidate leaf categories. The final output of this breadth-first traversal is a set of candidate leaf categories that includes categories C5, C12, and C13. This example demonstrates how the breadth-first approach incrementally evaluates and prunes the taxonomy level by level, using semantic scoring to guide the selection of relevant categories and efficiently identify the most appropriate leaf categories for a given query.

In contrast to the breadth-first approach, a depth-first approach can employed by the query categorization component 114, which focuses on exploring individual subtrees of the taxonomy in a more linear manner. The query categorization component 114 selects a subtree and begins traversal from its root, using the language model 116 to score each category node along a single path. At each step, the relevance score of the current category is compared to a minimum threshold. If the relevance score meets or exceeds the minimum threshold, the traversal continues to the next child category; otherwise, the path is terminated. If a leaf category is reached in the subtree, it is added to a set of candidate leaf categories. This process is repeated for each subtree in the taxonomy. Unlike the breadth-first approach, which evaluates all categories at a given level before proceeding, the depth-first approach evaluates one path at a time, allowing for a more focused and intent-preserving categorization. This approach is particularly useful for identifying structural weaknesses or semantic gaps in the taxonomy, as it highlights category nodes that consistently fail to meet relevance thresholds across multiple queries. While the depth-first strategy may result in fewer candidate categories and may be less suitable for broad categorization tasks, it excels in diagnostic applications and in scenarios where high precision is required. The depth-first method also supports the use of absolute thresholds, which can be tuned to identify underperforming or misaligned taxonomy nodes, thereby informing potential improvements to the taxonomy structure.

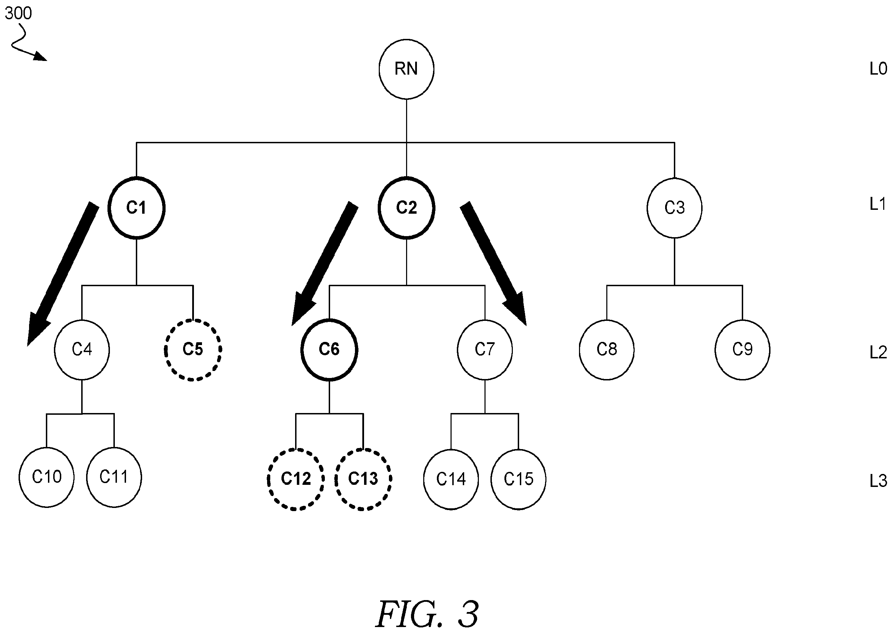

FIG. 3 presents an example of the depth-first approach applied to a category taxonomy 300. Similar to the category taxonomy 200 in FIG. 2, the category taxonomy 300 is structured across four levels, beginning with a root node (RN) at level 0 (L0). Level 1 (L1) includes categories C1, C2, and C3; level 2 (L2) includes categories C4 through C9; and level 3 (L3) includes categories C10 through C15. This example illustrates how the depth-first traversal proceeds by evaluating one subtree at a time, moving from parent categories to child categories along a single path until either a leaf category is reached or a category fails to meet the minimum threshold.

In the first subtree of this example, the language model scores category C1 and determines that it satisfies the threshold. As a result, the traversal continues to category C4, a child of category C1. However, the relevance score for category C4 does not satisfy the threshold, and therefore its children, leaf categories C10 and C11, are discarded. The traversal then considers category C5, which is also a child of category C1. Since category C5 is a leaf category and its parent category C1 was selected, category C5 is added to the set of candidate leaf categories.

In the next subtree, the language model scores category C2 and finds that it satisfies the threshold. The traversal continues to category C6, a child of category C2, and its score also satisfies the threshold. Because category C6 is selected and its children categories C12 and C13 are leaf categories, both categories C12 and C13 are added to the set of candidate leaf categories. The traversal then proceeds to the next subtree under C2, evaluating category C7. However, category C7 does not satisfy the threshold, and its children, leaf categories C14 and C15, are discarded.

Finally, in the next subtree, the language model scores category C3 and determines that it does not satisfy the threshold. As a result, its children, leaf categories C8 and C9, are also discarded without further evaluation. The final output of this depth-first traversal includes the candidate leaf categories C5, C12, and C13. This example demonstrates how the depth-first approach selectively explores paths in the taxonomy, pruning entire branches early when intermediate nodes fail to meet relevance criteria, thereby enabling a more conservative and focused categorization process.

In addition to the breadth-first and depth-first traversal strategies, the query categorization component 114 can employ a number of additional approaches for query categorization to enhance scalability, accuracy, and adaptability. For instance, one alternative is a hybrid embedding and LLM scoring approach, where embedding-based similarity search is used to pre-select a subset of potentially relevant categories before applying semantic scoring using the language model 116. Embedding-based similarity search involves using an embedding model to generate a category embedding (e.g., feature vector) of each category and an query embedding of a search query, and determining a similarity (e.g., cosine similarity) between the query embedding and the category embeddings. This can include, for instance, an embedding-based nearest neighbor search. This approach can reduce the number of LLM scoring evaluations required, making it more scalable for large-scale applications. Another variation involves subtree preselection using embeddings, where one or more relevant subtrees of the category taxonomy 122 are identified based on semantic similarity to the query, and the chain-of-thought breadth-first search is then applied only within the one or more selected subtrees. This approach maintains the benefits of hierarchical reasoning while narrowing the search space. A further alternative involves embedding filtering at each category node during traversal. In this approach, before invoking the LLM to score child categories, an embedding-based filter is applied to eliminate clearly irrelevant options. This reduces computational overhead and mitigates the impact of noisy or overly broad category taxonomies.

The system also supports intent-driven contextual learning, where additional context such as user intent (e.g., searching for accessories versus main products), brand preferences, or user history is incorporated into the LLM prompts. This allows the categorization process to be dynamically tailored to the user's needs, improving relevance and personalization. In further aspects, a diagnostic method using conservative absolute thresholding in a depth-first traversal can be used. In this approach can be used, for instance, to identify structural weaknesses in a category taxonomy. By applying strict thresholds and observing where queries fail to reach relevant leaf categories, the system can highlight nodes that may be misaligned or missing, thereby informing potential improvements to the taxonomy structure. These alternative approaches provide a flexible framework for adapting the categorization process to different operational requirements and data quality conditions.

The language model 116 used by the query categorization component 114 can include a set of statistical or probabilistic functions to perform Natural Language Processing (NLP) in order to understand, learn, and/or generate human natural language content. For example, the language model 116 can be a tool that determines the probability of a given sequence of words occurring in a sentence or natural language sequence. Simply put, it can be a model that is trained to predict the next word in a sentence. In some configurations, the language model 116 is a large language model (LLM) that is trained on enormous amount of data and/or has a large number of parameters. For instance, the language model 116 can be an LLM comprising a deep neural network that is very large (billions to hundreds of billions of parameters) and understands, processes, and produces human natural language by being trained on massive amounts of text.

In accordance with some aspects, the language model 116 used by the query categorization component 114 comprises an artificial neural network (ANN). As used herein, an ANN comprises multiple operational layers, including an input layer and an output layer, as well as any number of hidden layers between the input layer and the output layer. Each layer comprises neurons. Different types of layers and networks connect neurons in different ways. Neurons have weights, an activation function that defines the output of the neuron given an input (including the weights), and an output. The weights are the adjustable parameters that cause a network to produce a correct output.

In some configurations, the language model 116 used by the query categorization component 114 is a pre-trained model that has not been fined-tuned. In other configurations, the language model 116 is a model that is built and trained from scratch or a pre-trained model that has been fine-tuned. In such configurations, the language model 116 can be trained or fine-tuned using training data. For instance, the training data can comprise pairs of data in which an input is paired with a ground truth output to train the language model 116 to generate output text that targets the ground truth output. During training, weights associated with each neuron can be updated. Originally, the language model 116 can comprise random weight values or pre-trained weight values that are adjusted during training. In one aspect, the language model 116 is trained using backpropagation. The backpropagation process comprises a forward pass, a loss function, a backward pass, and a weight update. This process is repeated using the training data. For instance, each iteration could include providing an input text string to the model, generating an output text string by the model, comparing (e.g., computing a loss) the output text string from the model with a ground truth output text string paired with the input text string, and updating the model based on the comparison. The goal is to update the weights of each neuron (or other model component) to cause the language model 116 to produce particular forms of output, including scores indicative of the semantic relevance of categories for search queries. Once trained, the weight associated with a given neuron can remain fixed. The other data passing between neurons can change in response to a given input. Retraining the network with additional training data can update one or more weights in one or more neurons.

The item retrieval component 118 is responsible for executing the core search functionality to identify search results. Upon receiving one or more selected leaf categories from the query categorization component 114 for a given search query, the item retrieval component 118 initiates a targeted search operation against the item listings data store 120. The item listings data store 120 can include structured information about available items, including metadata such as titles, descriptions, prices, seller information, and category assignments. In some aspects, the item retrieval component 118 uses the one or more leaf categories from the query categorization component 114 as constraints to filter the search space, ensuring that only items associated with at least one of the identified leaf categories are considered. This constrained search significantly improves the relevance of the results by focusing on items that is semantically aligned with the search query.

The retrieval process can also involve ranking or scoring mechanisms to prioritize items. These mechanisms can incorporate various signals, such as keyword matching, item popularity, recency, or user personalization data, to further refine the ordering of results. In some aspects, the one or more leaf categories from the query categorization component 114 can be used in the ranking process. Once the relevant items are identified and ranked, the item retrieval component 118 can transmit the search results to the front end component 110. The front end component 110 then delivers the search results to the user device that submitted the search query.

### Example Methods for Item Retrieval using Chain-of-Thought Query Categorization

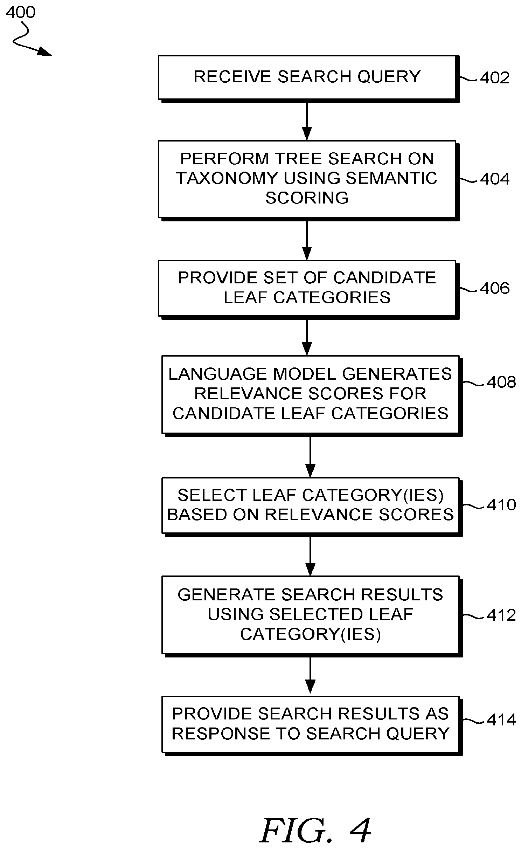

With reference now to FIG. 4, a flow diagram is provided that illustrates a method 400 for performing item retrieval using CoT query categorization. The method 400 may be performed, for instance, by components of the listing platform 104 of FIG. 1. Each block of the method 400 and any other methods described herein comprises a computing process performed using any combination of hardware, firmware, and/or software. For instance, various functions can be carried out by a processor executing instructions stored in memory. The methods can also be embodied as computer-usable instructions stored on computer storage media. The methods can be provided by a standalone application, a service or hosted service (standalone or in combination with another hosted service), or a plug-in to another product, to name a few.

As shown at block 402, the method begins by a system receiving a search query. The search query may be received from a user device, through a front-end interface of a listing platform (e.g., the front end component 110 of FIG. 1. The search query can be expressed in natural language and may include keywords, phrases, or other indicators of user intent.

As shown at block 404, the system performs a tree search on a hierarchical taxonomy of categories using a language model and semantic scoring. The taxonomy includes intermediate and leaf categories, and the tree search involves traversing this structure to identify categories that are semantically relevant to the search query. The language model evaluates category nodes in the category taxonomy based on various category data, such as the category name, description, and hierarchical path, and assigns a relevance score that reflects the semantic alignment between the search query and the category. The traversal can involve pruning less relevant branches of the taxonomy and retaining only those paths that lead to high-scoring leaf nodes. This may be performed using different traversal strategies, such as breadth-first or depth-first, or alternative approaches like embedding-based filtering or hybrid methods, depending on the implementation.

As shown at block 406, the system provides a set of candidate leaf categories based on the results of the tree search. These candidate categories represent the most semantically relevant endpoints in the taxonomy that align with the search query. As shown at block 408, the language model generates a relevance score for each of the candidate leaf categories. In some configuration, this scoring process can involve a more focused evaluation of each leaf category using detailed category data and the original search query. In some implementations, the language model can also incorporate contextual signals, such as user preferences or historical behavior, to refine the relevance scores. The goal is to rank the candidate leaf categories in terms of their semantic relevance to the search query, enabling the system to make informed decisions about which categories to prioritize.

As shown at block 410, the system selects one or more leaf categories based on the relevance scores. This selection may involve applying thresholds or ranking criteria to identify the most relevant categories. The one or more selected leaf categories serve as the final categorization result for the search query and are used to guide the item retrieval process. By narrowing the focus to a small set of highly relevant categories, the system improves both the precision and efficiency of the search.

As shown at block 412, the system generates search results using the one or more selected leaf categories. This involves querying an item listings data store to retrieve items that are associated with the one or more selected categories. In some aspects, this can include filtering and/or ranking search results based on the one or more selected categories. The retrieval process can also incorporate additional ranking signals, such as keyword matching, item popularity, or personalization data, to further refine the results. As shown at block 414, the system provides the search results as a response to the search query. These results can be transmitted to the user device via the front-end interface of the listing platform. The results may be presented on a search results page in a ranked list, grid, or other format suitable for user interaction.

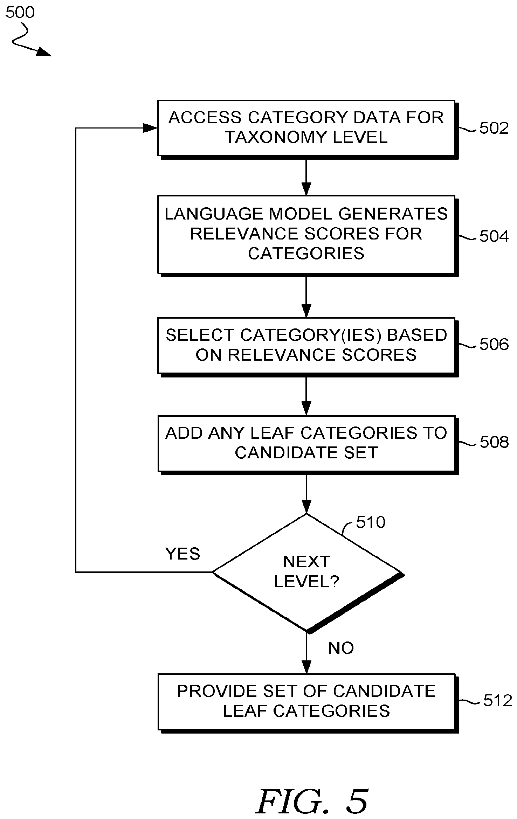

FIG. 5 provides a flow diagram that illustrates a method 500 for performing CoT query categorization using a breadth-first approach. The method 500 may be performed, for instance, by components of the listing platform 104 of FIG. 1. As shown at block 502, the method begins by accessing category data for a particular level in a hierarchical taxonomy. The category taxonomy comprises a structured set of categories organized into multiple levels, including intermediate and leaf categories. The category data accessed can include, for instance, textual descriptions, category names, hierarchical paths (breadcrumbs), and other metadata that describe the semantic content and context of each category.

As shown at block 504, a language model generates relevance scores for the categories at the current taxonomy level. These relevance scores reflect the semantic alignment between the search query and each category based on the accessed category data. The language model can consider various contextual signals, such as the query intent, user preferences, or historical behavior, to enhance the accuracy of the scoring. The relevance scores are used to determine which categories are most likely to be relevant to the search query and should be retained for further traversal or selection.

As shown at block 506, the system selects one or more categories from the current level based on the relevance scores generated by the language model. This selection process can involve applying one or more thresholds, such as a dynamic threshold derived from the distribution of scores and/or a fixed minimum threshold, to prune less relevant categories. The selected categories are those that meet or exceed the threshold criteria and are considered semantically aligned with the search query. These categories are then used to determine the next steps in the traversal process.

As shown at block 508, if any of the categories selected at block 506 have child leaf categories, those leaf categories are add to a set of candidate leaf categories. As shown at block 510, the system also determines whether there is a next level in the category taxonomy to process. If additional levels exist beneath the currently selected categories, the method proceeds to the next level and repeats the process of accessing category data, generating relevance scores, and selecting categories. This iterative traversal continues until all relevant levels have been processed or until no further levels remain. At each level, only categories that are child categories of categories selected at the previous level are included. This enables pruning of the category taxonomy by removing categories below non-selected categories from being processed. As shown at block 512, once the traversal is complete and no further levels remain, the system provides the set of candidate leaf categories, which can then be used to select one or more categories for retrieving search results for the search query, as described above with reference to FIG. 4.

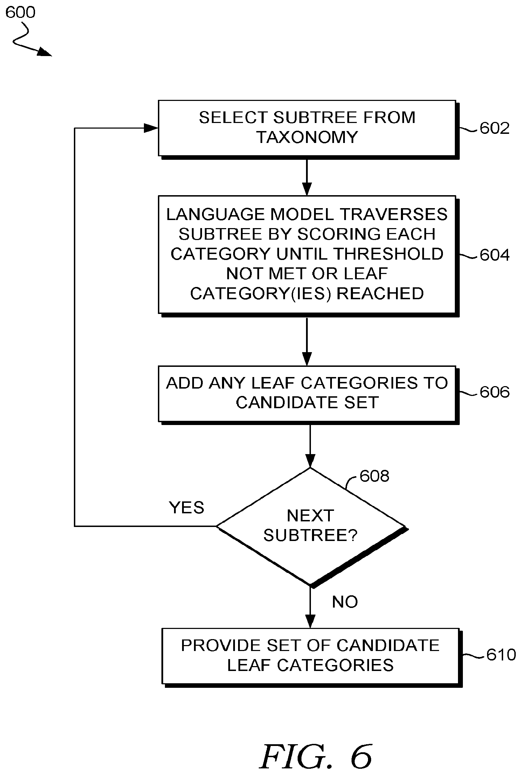

FIG. 6 provides a flow diagram that illustrates a method 600 for performing CoT query categorization using a depth-first approach. The method 600 may be performed, for instance, by components of the listing platform 104 of FIG. 1. As shown at block 602, the method begins by selecting a subtree from a hierarchical taxonomy of categories. The category taxonomy comprises a structured hierarchy of categories, including intermediate and leaf categories, and is used to semantically organize item listings. The selection of a subtree may be based on various criteria, such as prior semantic filtering, embedding-based similarity to the search query, or predefined traversal strategies. This step initiates a focused exploration of a portion of the taxonomy, allowing the system to evaluate semantic relevance in a more targeted and efficient manner.

As shown at block 604, a language model traverses the selected subtree by scoring category nodes based on semantic relevance to the search query. The traversal proceeds in a depth-first manner, evaluating one path at a time. At each step of a subtree traversal, the language generates a relevance score for the current category using category data such as, for instance, the category name, description, and hierarchical path, along with the search query. If the relevance score meets or exceeds a predefined threshold, the traversal continues to the next child category. If the threshold is not met or if a leaf category is reached, the traversal of that path is terminated. This approach ensures that only semantically relevant paths are explored, improving the precision and efficiency of the categorization process.

As shown at block 606, if a leaf category is reached during the traversal of the current subtree, it is added to a set of candidate leaf categories. These candidate categories represent potential final categorizations for the search query and are retained for further evaluation or use in item retrieval.

As shown at block 608, the system determines whether there are additional subtrees in the taxonomy that should be evaluated. If more subtrees remain, the method returns to block 602 to select the next subtree and repeat the traversal and scoring process. This iterative evaluation of subtrees allows the system to comprehensively assess different branches of the taxonomy while maintaining a focused and efficient traversal strategy.

As shown at block 610, once all relevant subtrees have been evaluated and no further subtrees remain, the system provides the set of candidate leaf categories, which can then be used to select one or more categories for retrieving search results for the search query, as described above with reference to FIG. 4.

### Exemplary Operating Environment

Having described implementations of the present disclosure, an exemplary operating environment in which embodiments of the present technology may be implemented is described below in order to provide a general context for various aspects of the present disclosure. Referring initially to FIG. 7 in particular, an exemplary operating environment for implementing embodiments of the present technology is shown and designated generally as computing device 700. Computing device 700 is but one example of a suitable computing environment and is not intended to suggest any limitation as to the scope of use or functionality of the technology. Neither should the computing device 700 be interpreted as having any dependency or requirement relating to any one or combination of components illustrated.

The technology may be described in the general context of computer code or machine-useable instructions, including computer-executable instructions such as program modules, being executed by a computer or other machine, such as a personal data assistant or other handheld device. Generally, program modules including routines, programs, objects, components, data structures, etc., refer to code that perform particular tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 7, computing device 700 includes bus 710 that directly or indirectly couples the following devices: memory 712, one or more processors 714, one or more presentation components 716, input/output (I/O) ports 718, input/output components 720, and illustrative power supply 722. Bus 710 represents what may be one or more busses (such as an address bus, data bus, or combination thereof). Although the various blocks of FIG. 7 are shown with lines for the sake of clarity, in reality, delineating various components is not so clear, and metaphorically, the lines would more accurately be grey and fuzzy. For example, one may consider a presentation component such as a display device to be an I/O component. Also, processors have memory. The inventors recognize that such is the nature of the art, and reiterate that the diagram of FIG. 7 is merely illustrative of an exemplary computing device that can be used in connection with one or more embodiments of the present technology. Distinction is not made between such categories as "workstation," "server," "laptop," "hand-held device," etc., as all are contemplated within the scope of FIG. 7 and reference to "computing device."

Computing device 700 can include a variety of "computer-readable media." Computer-readable media can be any available media that can be accessed by computing device 700 and includes both volatile and nonvolatile media, removable and non-removable media. By way of example, and not limitation, the different types of computer-readable media can include "computer storage media" and "communication media."

"Computer storage media" includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store information (such as computer-readable instructions, data structures, program modules or other data) and which can be accessed by computing device 700. The terms "computer storage media" and "computer storage medium" do not comprise signals per se.

"Communication media" embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 712 includes computer storage media in the form of volatile and/or nonvolatile memory. The memory may be removable, non-removable, or a combination thereof. Exemplary hardware devices include solid-state memory, hard drives, optical-disc drives, etc. Computing device 700 includes one or more processors that read data from various entities such as memory 712 or I/O components 720. Presentation component(s) 716 present data indications to a user or other device. Exemplary presentation components include a display device, speaker, printing component, vibrating component, etc.

I/O ports 718 allow computing device 700 to be logically coupled to other devices including I/O components 720, some of which may be built in. Illustrative components include a microphone, joystick, game pad, satellite dish, scanner, printer, wireless device, etc. The I/O components 720 may provide a natural user interface (NUI) that processes air gestures, voice, or other physiological inputs generated by a user. In some instance, inputs may be transmitted to an appropriate network element for further processing. A NUI may implement any combination of speech recognition, touch and stylus recognition, facial recognition, biometric recognition, gesture recognition both on screen and adjacent to the screen, air gestures, head and eye-tracking, and touch recognition associated with displays on the computing device 700. The computing device 700 may be equipped with depth cameras, such as, stereoscopic camera systems, infrared camera systems, RGB camera systems, and combinations of these for gesture detection and recognition. Additionally, the computing device 700 may be equipped with accelerometers or gyroscopes that enable detection of motion.

The present technology has been described in relation to particular embodiments, which are intended in all respects to be illustrative rather than restrictive. Alternative embodiments will become apparent to those of ordinary skill in the art to which the present technology pertains without departing from its scope.

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described herein may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further, the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technology are described with reference to a distributed computing environment; however, the distributed computing environment depicted herein is merely exemplary. Components can be configured for performing novel embodiments of embodiments, where the term "configured for" can refer to "programmed to" perform particular tasks or implement particular abstract data types using code. Further, while embodiments of the present technology may generally refer to the technical solution environment and the schematics described herein, it is understood that the techniques described may be extended to other implementation contexts.

From the foregoing, it will be seen that this technology is one well adapted to attain all the ends and objects set forth above, together with other advantages which are obvious and inherent to the system and method. It will be understood that certain features and subcombinations are of utility and may be employed without reference to other features and subcombinations. This is contemplated by and is within the scope of the claims.

## Claims

1. One or more computer storage media storing computer-useable instructions that, when used by one or more computing devices, cause the one or more computing devices to perform operations, the operations comprising:
receiving a search query;
iterating through each level in a hierarchical taxonomy of categories until one or more leaf categories are reached, wherein each iteration comprises:
accessing category data for each category in a set of categories at a current level in the hierarchical taxonomy of categories,
causing a language model to generate a relevance score for each category in the set of categories using the search query and the category data for each category in the set of categories, wherein each relevance score indicates a relevance of a corresponding category from the set of categories to the search query,
selecting one or more categories from the set of categories using the relevance scores, wherein a next set of categories for a next level in the hierarchical taxonomy of categories comprises children categories of the selected one or more categories, and
when one or more leaf categories are reached, adding the one or more leaf categories to a set of candidate leaf categories;
causing the language model to generate a relevance score for each leaf category in the set of candidate leaf categories; and
providing search results for the search query based on at least one leaf category selected from the set of candidate leaf categories based on the relevance score for each leaf candidate in the set of candidate leaf categories.

2. The one or more computer storage media of claim 1, wherein the category data for a first category in the set of categories at the current level in the hierarchical taxonomy of categories comprises one or more selected from the following: a category name, a category description, and information regarding a path through the hierarchical taxonomy of categories to the first category; and/or
wherein the language model generates the relevance score for each category in the set of categories also using a context associated with the search query, the context being based on one or more selected from the following: search intent, and user information for a user submitting the query.

3. The one or more computer storage media of claim 1 or 2, wherein the one or more categories are selected from the set of categories by comparing the relevance scores to one or more thresholds,
wherein the one or more thresholds optionally comprise a predetermined minimum threshold and a dynamic selection threshold that is determined as a function of the relevance scores for the set of categories.

4. The one or more computer storage media of any one of the preceding claims, wherein each iteration further comprises:
pre-selecting a subset of a plurality of categories at the current level as the set of categories at the current level using a semantic search based on the search query; and
using an embedding-based nearest neighbor search before scoring the categories with the language model; and/or
wherein the language model generates the relevance scores for each category in the set of categories using a chain-of-thought approach, considering information from one or more previous iterations.

5. A computer-implemented method comprising:
receiving a search query;
iterating through subtrees in a hierarchical taxonomy of categories until one or more leaf categories are reached, wherein each iteration comprises:
selecting a subtree from the hierarchical taxonomy of categories,
causing a language model to traverse the subtree by generating a relevance score for each category in the subtree until the language model reaches an intermediate category that does not satisfy a threshold or the language model reaches one or more leaf categories in the subtree, wherein each relevance score indicates a relevance of a corresponding category from to the search query, and
when one or more leaf categories in the subtree are reached, adding the one or more leaf categories to a set of candidate leaf categories;
causing the language model to generate a relevance score for each leaf category in the set of candidate leaf categories; and
providing search results for the search query based on at least one leaf category selected from the set of candidate leaf categories based on the relevance score for each leaf candidate in the set of candidate leaf categories.

6. The computer-implemented method of claim 5, wherein the language model generates a relevance score for a first category in the subtree is based on category data for the first category comprising one or more selected from the following: a category name, a category description, and information regarding a path through the hierarchical taxonomy of categories to the first category; and/or
wherein the language model generates a relevance score for a first category in the subtree also using a context associated with the search query, the context being based on one or more selected from the following: search intent, and user information for a user submitting the query.

7. The computer-implemented method of claim 5 or 6, wherein the language model generates a relevance score for first category using a chain-of-thought approach, considering information from one or more previous categories in the subtree processed by the language model.

8. A computer system comprising:
one or more processors; and
one or more computer storage media storing computer-useable instructions that, when used by the one or more processors, causes the computer system to perform operations comprising:
receiving a search query;
performing a tree search on a hierarchical taxonomy of categories using semantic scoring by a language model to provide a set of candidate leaf categories, wherein the language model traverses the hierarchical taxonomy of categories by using category data to generate relevance scores for categories that indicate relevance of the categories to the search query;
causing the language model to generate a relevance score for each leaf category in the set of candidate leaf categories; and
providing search results for the search query based on at least one leaf category selected from the set of candidate leaf categories based on the relevance score for each leaf candidate in the set of candidate leaf categories.

9. The computer system of claim 8, wherein the category data for a first category in the hierarchical taxonomy of categories comprises one or more selected from the following: a category name, a category description, and information regarding a path through the hierarchical taxonomy of categories to the first category; and/or
wherein the language model generates the relevance scores for categories from the hierarch taxonomy of categories also using a context associated with the search query, the context being based on one or more selected from the following: search intent, and user information for a user submitting the query.

10. The computer system of claim 8 or 9, wherein the language model generates the relevance scores for categories from the hierarchical taxonomy of categories using a chain-of-thought approach, considering information from one or more previous iterations.

11. The computer system of any one of claims 8 to 10, wherein performing the tree search on the hierarchical taxonomy of categories comprises iterating through each level in the hierarchical taxonomy of categories until one or more leaf categories are reached, wherein each iteration comprises:
accessing category data for each category in a set of categories at a current level in the hierarchical taxonomy of categories;
causing the language model to generate a relevance score for each category in the set of categories using the search query and the category data for each category in the set of categories;
selecting one or more categories from the set of categories using the relevance scores, wherein a next set of categories for a next level in the hierarchical taxonomy of categories comprises children categories of the selected one or more categories; and
when one or more leaf categories are reached, adding the one or more leaf categories to the set of candidate leaf categories.

12. The computer system of claim 11, wherein the one or more categories are selected from the set of categories by comparing the relevance scores to one or more thresholds.

13. The computer system of claim 11 or 12, wherein the one or more thresholds comprise a predetermined minimum threshold and a dynamic selection threshold that is determined as a function of the relevance scores for the set of categories.

14. The computer system of any one of claims 11 to 13, wherein each iteration further comprises:
pre-selecting a subset of a plurality of categories at the current level as the set of categories at the current level using a semantic search based on the search query; and
using an embedding-based nearest neighbor search before scoring the categories with the language model.

15. The computer system of any one of claims 8 to 14, wherein performing the tree search on the hierarchical taxonomy of categories comprises iterating through subtrees in the hierarchical taxonomy of categories until one or more leaf categories are reached, wherein each iteration comprises:
selecting a subtree from the hierarchical taxonomy of categories;
causing the language model to traverse the subtree by generating a relevance score for each category in the subtree until the language model reaches an intermediate category that does not satisfy a threshold or the language model reaches one or more leaf categories in the subtree; and
when one or more leaf categories in the subtree are reached, adding the one or more leaf categories to the set of candidate leaf categories.
